# EUROPEAN PATENT APPLICATION

(11) **EP 4 169 479 A1**
(43) Date of publication of application: **26.04.2023**
(21) Application number: 21203395.5
(22) Date of filing: 19.10.2021
(51) Int. Cl.: A61C 9/00

(54) **METHOD AND SYSTEM FOR TWO DIMENSIONAL IMAGING**

(71) Applicant: DENTSPLY SIRONA Inc., York, PA 17401 (US); Sirona Dental Systems GmbH, 64625 Bensheim (DE)
(72) Inventor: Kucharczyk, Ronny, 64625 Bensheim (DE); Voss, Björn, 64625 Bensheim (DE)
(74) Representative: Özer, Alpdeniz

(57) **Abstract**

A method and system for dynamically providing visual feedback about a quality of data collected during image acquisition. Images or light patterns are projected onto an object for acquisition and for relaying feedback about a quality of the acquired image data to a user. In this way unsuccessful registrations and surface areas of the object that have not been acquired yet may be corrected by informing the user to repeat image acquirement process at corresponding locations on the object or surface.

## Description

### TECHNICAL FIELD OF THE INVENTION

The present application relates generally to a method and system for two-dimensional (2D) imaging and, more particularly, to a method and system for dynamically providing real-time feedback about a quality of data being collected during two-dimensional imaging, said real-time feedback being provided at the object to be acquired.

### BACKGROUND ART OF THE INVENTION

3D scanning and 2 D image acquisition are used in multiple industries such as healthcare, manufacturing, engineering, and consumer entertainment. The results of 3D scans are used for rapid prototyping, quality inspections and healthcare treatments, among other applications. Results of 2D image acquisitions are seen as images and videos, but also registered respectively combined in panorama modes. During a 2D image acquisition the quality and quantity of data from a certain spot on the acquired object surface may be critical for the subsequent processing pipeline that relies on the images as an input. During an image acquisition for example with a handheld device the operator may regularly change his/her view between the object to be acquired and towards a display by orienting the handheld device into different positions in order to capture all regions on the surface of the object to be acquired. The operator has to (i) ensure that the image acquisition is ongoing and is not interrupted, (ii) check if a defined marker, or the region of interest on the object is acquired successfully, (iii) check which regions of the object have already been acquired and which regions have not been acquired yet and/or(iv) ensure that acquired images are sufficient for its purposes.

A main drawback of this manual process may be that it is tedious, time consuming and the user may lose orientation when looking back and forth between the object to be acquired and the display screen to check the image quality and if the data coverage on the surface is sufficient. Moreover, current systems may not indicate if acquired data is sufficient or if some areas of the object should be captured again. Further, by simply looking at a display, an operator may overlook bad or missing data that may not be detected by the untrained eye.

U.S. Patent No 9,838,670B2 discloses for "point and click" camera whether a current position of the camera is adequate for capturing a second image based on a first position of a first image. It provides a method for three-dimensional imaging including storing a first two-dimensional image of field of view of a scanning device at a first position where a first three-dimensional view of the object is captured with the scanning device, estimating location metric of a second two-dimensional image of field of view of the scanning device at a second position relative to the first image while the scanning device is being moved from the first position to the second position, and generating instructions on providing feedback to the user based on the location metric, wherein said feedback is provided to indicate if said second position is adequate for capturing a second three-dimensional view.

U.S. Patent No. 7,940,260B2 discloses a scanning system that may acquire three-dimensional images as an incremental series of fitted three-dimensional data sets by testing for successful incremental fits in real time and providing a variety of visual user cues and process modifications depending upon the relationship of newly acquired data to previously acquired data.

U.S Patent No. 4,837,732A discloses a method of facilitating acquisition of data defining the three-dimensional shape of prepared teeth and their immediate vicinity including displaying on a video display a live image from a scan head, manually orienting the scan head relative to the prepared teeth while observing the image of the teeth on said video display, thereafter generating from data produced by said scan head in a selected orientation corresponding depth and contrast images, and thereafter processing said depth image based on said contrast image.

WO2018234396A1 discloses a method a method for producing a two-dimensional whole image of a recording region, which is captured by means of a plurality of individual images each having its own viewing direction and its own distance. All of the individual images are joined to form the overall image. Overlapping is necessary for determining the relative spatial orientation between two individual images.

### SUMMARY OF THE INVENTION

The above-mentioned disadvantages associated with the background art have been overcome by the method according to claim 1 and the system according to claim 11 for dynamically providing visual feedback about a quality of image data collected during an image capturing process. Images can be captured generation of two-dimensional data and for relaying feedback about a quality of the image acquisition to the user. Herein regions on the surface for which the 2D data do not fulfill the requirements of the user or of subsequent processing steps with regard to quality or completeness or other metrics for example holes/gaps (i.e. surface regions that were not captured) may be corrected by informing the user to repeat image acquisition at corresponding locations of the object or surface.

In an aspect herein, the present invention provides a method for dynamically providing visual feedback about a quality and/or other predetermined properties of image data collected, said visual feedback provided at or near an object or surface, the method comprising the steps of:
providing a plurality of individual 2D images of an object or surface;
determining if at least one of the plurality of individual images and/or an accumulated plurality of images meet predetermined recording criteria; and
projecting said visual feedback onto the object or surface corresponding to the individual images based on the determining step

According to another aspect of the present invention a method is provided including one or more combinations of the following: (i) wherein said successful registration feedback and/or non-successful registration feedback are projected as part of a projection image which includes a first region corresponding to projection rays for image acquisition and a second region corresponding to the successful registration feedback and/or the non-successful registration feedback, (ii) further comprising providing said visual feedback in real-time, (iii) further comprising extracting the spatial relation between a subset of the plurality of individual 2D images to determine if corresponding regions of the object or surface have been previously acquired, (iv) wherein each of the plurality of individual images overlaps with another image to form an overlapping area, (v) wherein the predetermined recording criteria is selected from the group consisting of (i) an adequate size of the overlapping area, (ii) an adequate number of characteristic structures in the overlapping area, (iii) an adequate image quality in the overlapping area and/or (iv)regions of acquired object of surface not contained in an accumulated data set.

In another aspect of the present invention, a system for dynamically providing visual feedback about a quality or the quantity of data collected during image acquisition, said visual feedback is provided at or near an object or surface. The system comprising at least one processor configured to: provide a plurality of individual images of a plurality of images of surfaces or an object; determine if each of the plurality of individual images meets a predetermined recording criteria; and project said visual feedback including a feedback onto surfaces of the object or surface corresponding to the individual image acquisition based on the determining step.

According to another aspect of the present invention the system is provided including one or more combinations of the following: (i) wherein the processor is further configured to project said successful registration feedback and/or non-successful registration feedback as part of a projection image which includes a first region corresponding to projection rays for image acquisition and a second region corresponding to the successful registration feedback and/or the non-successful registration feedback, (ii) wherein the processor is further configured to provide said visual feedback in real-time, (iii) wherein the processor is further configured to extract the spatial relation between a subset of the plurality of individual 2D images to determine if corresponding regions of the object or surface have been previously acquired, (iv) further comprising at least one projector and at least one image sensor in communication with the processor, (v) wherein the projector is housed inside image acquisition device or camera, (vi) wherein the projector is separate from a , (vii) wherein the projector is selected from the group consisting of a Digital Light Processing projector, a Light Emitting Diode projector, a Laser projector, a Liquid Crystal on Silicon projector and a Liquid Crystal Display projector.

Further features and advantages, as well as the structure and operation of various embodiments herein, are described in detail below with reference to the accompanying drawings.

### BRIEF DESCRIPTION OF THE DRAWINGS

Example embodiments will become more fully understood from the detailed description given herein below and the accompanying drawings, wherein:
Fig. 1 is a block diagram illustrating a system according to an embodiment of the present invention;
Fig. 2 is a diagram illustrating inner and outer rays according to an exemplary embodiment of the present invention;
Fig. 3 is a diagram illustrating an acquisition volume according to an exemplary embodiment of the present invention;
Fig. 4 is a perspective view showing a projection with a camera according to an exemplary embodiment of the present invention;
Fig. 5 is a top view illustrating a projection image according to an exemplary embodiment of the present invention;
Fig. 6 is a block diagram showing a computer system according to an exemplary embodiment of the present invention.

### DETAILED DESCRIPTION OF THE INVENTION

In accordance with example aspects described herein, a method and system for dynamically providing feedback about a quality of data being collected during an image acquisition, as well as feedback about which areas of an object or surface are already acquired, said feedback being provided at/or near the object or surface.

The present invention may provide a method and system for providing feedback during image acquisition by images of object or surface. The invention may therefore enable image acquisition in which a display/monitoring screen may not be needed and wherein unsuccessful registrations gaps/holes as well as imaged regions that have an insufficient quality may be corrected by informing a user to repeat image acquisition at corresponding locations.

### System for modeling and visualizing an image acquisition solution

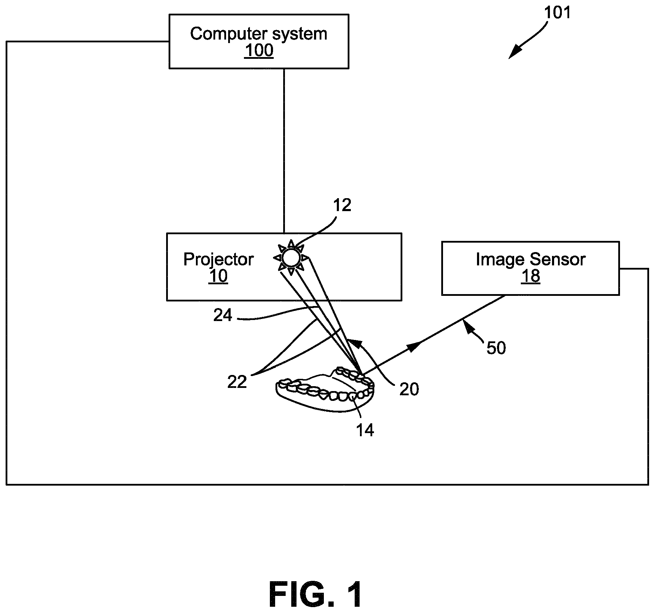

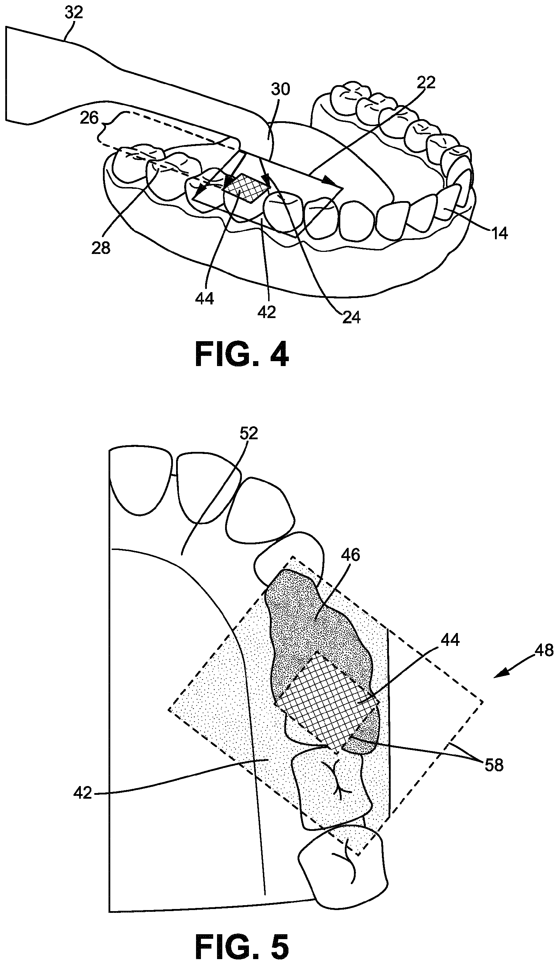

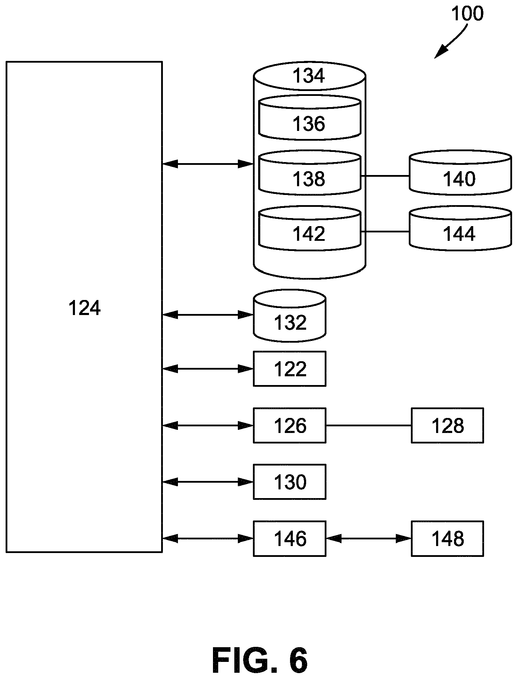

Fig. 1 illustrates a block diagram of a light guidance system 101 comprising at least one projector **10** having a light source **12**, at least one image sensor **18** (e.g. a 2D image sensor) and a computer system **100** with at least one computer processor **122** (Fig. **6**). The projector **10** and image sensor **18** may be in communication with the computer system **100**. The projector **10** may be a projector housed within a camera such as an intraoral camera or mobile phone camera **32**. Alternatively, the projector **10** may be a separate projector such as a digital light projector outside the camera **32**. Projectors **10** may work on a principle of filtering a light source **12** based on an image to be displayed. A lens (not shown) may then be used to transfer the image to a surface on which the image may be displayed. Different kinds of projectors may be used, including Digital Light Processing (DLP) projectors which may be based on Digital Micromirror Device (DMD) technology wherein an array of microscopic mirrors may be configured to tilt either toward the light source **12** in the projector **10** or away from it in order to create a light or dark pixel on a projection surface. Other kinds of projectors may include Light Emitting Diode (LED) projectors, Laser projectors, Liquid Crystal on Silicon (LCoS) projectors and Liquid Crystal Display (LCD) projectors. One or more projectors **10** may be used for projecting one or more projection images **48** (Fig. **5**) on a surface **28** (Fig. **4**) and may be constructed and operated in accordance with at least one exemplary embodiment herein. The projector may illuminate a field of view of the image acquisition system as well as surfaces outside the field of view. Herein, information about already acquired surfaces, surfaces not yet acquired as well as other information (such as marker registration) may be visually superimposed by using a projected pattern or color onto surfaces outside the field of view. In this way the user can control the scan process while looking onto the object itself. Said projection may be dynamic, wherein an illumination beam **20** from the projector **10** may be controlled to produce said one or more projection images **48** at preferably predetermined time intervals and wherein at least a part of the illumination beam **20** may be reflected into a monitoring beam **50** for image acquisition.

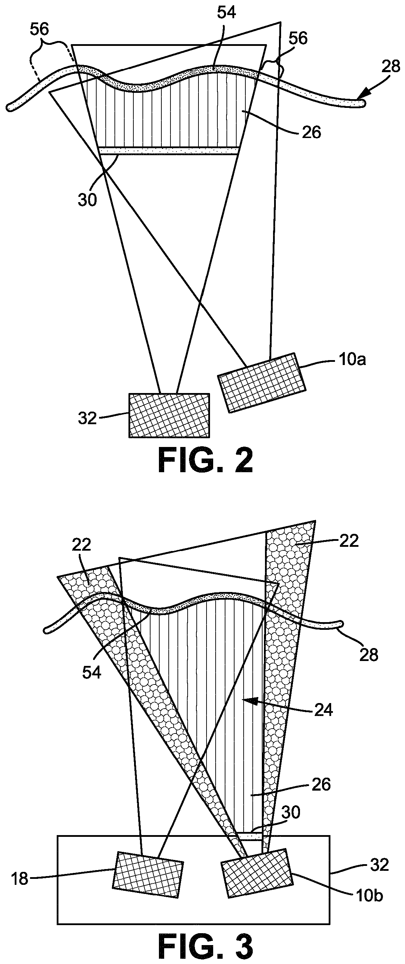

As shown in Fig. **4**, each projection image **48** may include a first/inner region **44** corresponding to projection rays for image acquisition and/or a second/outer region **42** corresponding to projection rays for providing a user with visual feedback and vice versa. A shape of the inner region **44** and/or outer region **42** may be pre-determined, for example, square, rectangle, circle etc. In an exemplary embodiment of the present invention as shown in Fig. **2**, an intraoral camera **32** may be electrically paired with a separate projector **10**a with the projector **10**a projecting at least a portion of projection image **48** on a tooth surface **28** for user feedback. The intra-oral camera **32** itself may also have a projector **10** for projecting at least another portion of the projection image **48** for image acquisition. Said pairing may be achieved by using a common controller such as a computer processor **122** to simultaneously control illumination of the tooth surface **28** by the illumination beam **20** from the projector **10**a and intra-oral camera **32** and recording of the reflected monitoring beam **50**.

In another exemplary embodiment of the present invention as shown in Fig. **3**, a projector **10**b of the intra-oral camera **32** may be configured to project the projection image **48** on the object **28** for both image acquisition and user feedback. Herein, inner rays **24** of the illumination beam **20** may be configured to produce the inner region **44** of the projection image **48** for image acquisition and/or outer rays **22** of the illumination beam **20** may be configured to produce the outer region **42** of the projection image **48** for user feedback and vice versa. Therefore, the projector **10**b of the camera **32** may be configured to project the illumination beam **20** comprising both projection rays for image acquisition and user feedback rays.

In a further embodiment, the projector **10** may be configured to alternate between projecting rays for image acquisition and projecting the user feedback rays.

In a further embodiment, the camera **32** may be configured so that the reflected monitoring beam **50** for image acquirement includes all or substantially all portions of the illumination beam **20** that are configured for image acquirement.

### Method for modeling and visualizing Image acquisition

Having described the light guidance system **101** of **Fig. 1**, a method for dynamically providing feedback about a quality of data being collected during image acquisition will now be further described.

The invention may include producing and updating a global image (e. g. panorama image) through an image acquisition process by a user moving a camera **30** over an object (e.g. a tooth surface **28**). The scan may begin wherein a memory of a computer system **100** may store a field of view **52** as an empty volume which may be subsequently updated as image taking progresses. After placing the camera head **30** over the object or surface, a projector **10** of the camera **32** may project an initial default projection image over a region of the object **52**, to show that image data have not been acquired yet for processing.

In an example embodiment herein, the projector **10** may be configured to provide a successful registration feedback signifying a successful registration of the current surface **54** and a non-successful registration feedback signifying a non-successful registration of the current surface **54** e.g. a blue colored rectangle or striped pattern (the inner region **44** of the projection image **48**, Fig. **5** , which also corresponds to a current object surface **54**) may be inside a larger red colored rectangle (outer region **42** of the projection image **48** corresponding to other surfaces **56** of the cavity), the red colored rectangle signifying a non-successful registration of the surfaces on which said feedback is projected. Upon any successful registration, corresponding surfaces **46** of the successful registration in the outer region **42** may receive a successful registration feedback, e.g. green light, signifying that said corresponding surfaces of the successful registration **46** have been successfully registered. In an embodiment herein, the outer region **42** may receive an initial non-successful registration feedback signifying that image acquisition process has not begun. Of course other implementations of the shapes and/or colors of the different components of the projection image **48** may be realized without departing from the scope of the invention.

Preferably, inner rays **24** of the illumination beam **20** as shown in Fig. **3**, which may be configured to form the inner region **44** of the projection image **48** (or rays from camera **32** in a light guidance system **101** having a separate projector **10**a for user feedback as shown in Fig. **2**), may pass through a field of view **26** (i.e. under the camera head **30**) onto at least a portion of an object **28** to be acquired, said portion of the object or surface **28** being the current acquired surface **54**. The outer rays **22** of the illumination beam **20** may coincide on other surfaces **56** of the object within a predefined boundary **58** within which feedback about whether or not corresponding points on said other surfaces **56** have been previously captured may be visually relayed to the user. At the beginning of the acquisition, a default feedback may be relayed to the user to show that said other surfaces **56** have not been previously captured.

The inner rays **24** of the illumination beam may be substantially reflected off the current acquired surface **54** towards an image sensor **18** of the camera **32** for further processing. Herein, 2D coordinates or markers of the current acquired surface **54** may be extracted in to determine if all or part of the current acquired surface **54** has been previously registered. If the current acquired surface **54** or any portion of the current acquired surface has not been previously acquired, the corresponding new data of unregistered portions may be stored by determining if the new data and/or accumulated data are sufficient according to one or more predetermined recording criteria/conditions said predetermined recording criteria including for example, whether or not the new data and/or accumulated data have a desired predetermined point density, and/or inconsistencies between individual acquired images. If the predetermined recording criteria is satisfied, the new data may be stored in an image stack for post processing or the data may be used to create a real-time combined image of the object. The outer region **42** of the projection image **48** corresponding to the new images may then be updated in to relay to the user when the camera **32** position changes to a new acquirement surface that the previous acquirement surface has been sufficiently recorded according to predetermined recording criteria. Herein, a need to constantly look at a monitor to track the progress of an ongoing image acquisition process and make necessary adjustments may be eliminated or substantially eliminated as a visual feedback for the user may be shown in the vicinity of the objects or surfaces being scanned.

Alternatively, if the current acquirement surface **54** has been previously captured, the next acquisition may be triggered to continue recording other surfaces.

Moreover, if the new data obtained is insufficient according to the predetermined recording criteria, the default feedback for the user signifying that the current acquirement surface **54** has not been captured/registered may remain unchanged or may be changed in a predetermined way to signify that the current acquirement surface **54** has not been scanned.

In an exemplary embodiment of the present invention determining if the new data is sufficient may be achieved as follows. A plurality of images may be received by the processor **122**, said plurality of images respectively corresponding to a plurality of current acquirement surfaces **54**, of one or more objects generated by the camera **32** according to one or more recording sequences. Each image may overlap with another acquired image to form a plurality of overlapping areas (not shown), and each overlapping area may include a later acquired image and an earlier acquired image, the later acquired image being generated at a later imaging position in the recording sequence than the earlier acquired image. Herein, for each overlapping area, it may be determined whether the overlapping area fulfills one or more predetermined recording criteria. The predetermined recording criteria may include, for example, (i) an adequate size of the overlapping area, (ii) an adequate number of characteristic structures in the overlapping area, (iii) an adequate image quality in the overlapping area and/or (iv)regions of acquired object of surface not contained in an accumulated data set.

If the predetermined recording criteria is/are satisfied, the later images may be added/registered to an image sequence that includes the earlier images, and/or a corresponding global image of the sequence may be reconstructed in real time or at a later time. It will be appreciated by a person of ordinary skill in the art that other registration step may be employed herein without departing from essential attributes of the invention.

Based on the homography of the recorded images, the projector **10** may be configured to project a feedback to the user signifying which corresponding portions of the object or surface have been sufficiently recorded and which regions have not been sufficiently recorded, e.g. green light may be projected to portions of the object or surface that have been sufficiently recorded and red light may be projected to portions of the object or surface that have not been recorded or have not been sufficiently recorded yet. This may be repeated in real-time for all other surface and recording sequences . Therefore, the user may not need to constantly look at a monitor to examine the progress of the acquisition procedure since the quality of registration during the capturing process may be provided to the user in an ongoing and as such unsuccessful registrations may be corrected by repeating image acquisition at corresponding locations on the object or surface.

In another workflow, the current acquirement surface **54** may be captured and a corresponding image acquired. The corresponding image may contain an image surface consisting of multiple 2D images, information about a position of the camera **32** relative to the image surface. The corresponding image may be registered to an accumulated data set from previous images and added to the accumulated data set if there is an overlap. Positional information about the camera 32 relative to the accumulated data set may be known. If there is no overlap (if it does not fit), the camera 32 may lose track of its position and the user may move the camera 32 to a position where the new acquirement may be registered and added to the data set. The accumulated data set (global image) may then be analyzed for holes/gaps in the data, low point density and /or inconsistencies. Further, the analysis may include or be a determination of if the temperature of the camera **32** exceeds a predetermined value. Based on the result of the analysis and the position of the camera **32** relative to the accumulated data set a projection image **48** for the projector **10** may be generated such that: (i) regions under the camera that are not represented in the accumulated data set may be indicated by a first color in the projection image **48** (for example red), (ii) regions like holes/gaps, low density regions and inconsistencies may be indicated in the projection image **48** by a second color (for example blue) and/or (iii) regions containing valid data (regions that are represented the accumulated data) are indicated by a third color (for example green). Herein the camera 32 may be moving and directly triggering the next acquisition, once the current acquisition is processed. In an embodiment herein, the camera **32** may determine the direction of projection of rays from a relative transformation of a prior acquisition to the accumulated data set, Herein, the camera **32** may have information about its position relative to the accumulated data set. Based on this information the camera **32** may determine the position (relative to the camera window) of regions that were not sufficiently recorded (red regions in the feedback projection) and project corresponding rays to said regions.

Further, by using an illumination that may alternate between projection rays for providing feedback and projection rays for image acquisition, interference the projection rays for providing feedback and projection rays for image acquisition may be reduced or eliminated.

Of course, another method similar to methods described herein for modeling and visualizing such a solution may be realized in light of descriptions provided.

In view of the foregoing description, it may be appreciated that the example embodiments described herein provide a method for dynamically providing feedback about a quality of data being collected during an image acquisition process.

### Computer System for modeling and visualizing an Image acquisition solution

Having described the light guidance system **101** and method, reference will now be made to **Fig. 6**, which shows a block diagram of a computer system **100** that may be employed in accordance with at least some of the example embodiments described herein. Although various embodiments may be described herein in terms of this exemplary computer system **100**, after reading this description, it may become apparent to a person skilled in the relevant art(s) how to implement the disclosure using other computer systems and/or architectures.

In an embodiment herein the computer system **100** may form a part of the light guidance system **101**. In another embodiment herein, the computer system may be separate from the light guidance system **101**. Although various embodiments may be described herein in terms of this exemplary computer system **100**, after reading this description, it may become apparent to a person skilled in the relevant art(s) how to implement the disclosure using other computer systems and/or architectures.

The computer system **100** may include at least one computer processor **122**. The computer processor **122** may include, for example, a central processing unit, a multiple processing unit, an application-specific integrated circuit ("ASIC"), a field programmable gate array ("FPGA"), or the like. The processor **122** may be connected to a communication infrastructure **124** (e.g., a communications bus, or a network). In an embodiment herein, the processor **122** includes a CPU that obtains an image stack or sequence of images from a signal preprocessing unit of the camera **32**. The stack may be temporarily stored in memory and then analyzed to determine is the images meet a predetermined recording criteria as described in the methods discussed herein. The processor **122** may then operate the projector **10** and/or light source **12** to control the illumination beam **20**.

The computer system **100** may optionally include a display interface (or other output interface) **126** which may forward video graphics, text, and other data from the communication infrastructure **124** (or from a frame buffer (not shown)) for display on a display unit **128** (which, in one example embodiment, may form or be included in the display unit **128** of **Fig. 1**)., though the display interface **126** and/or display unit **128** may not be needed.

The computer system **100** may also include an input unit **130** that may be used by a user of the computer system **100** to send information to the computer processor **122.** The input unit **130** may include a trackball or other input device such as a keyboard and/or touchscreen monitor. In one example, the display unit **128**, the input unit **130**, and the computer processor **122** may collectively form a user interface.

One or more steps of generating the controlling the system **101** to generate images and feedback for the user may be stored on a non-transitory storage device in the form of computer-readable program instructions. To execute a procedure, the processor **122** loads the appropriate instructions, as stored on storage device, into memory and then executes the loaded instructions.

The computer system **100** of **Fig. 6** may comprise a main memory **132**, which may be a random access memory ("RAM"), and also may include a secondary memory **134**. The secondary memory **134** may include, for example, a hard disk drive **136** and/or a removable-storage drive **138** (e.g., a floppy disk drive, a magnetic tape drive, an optical disk drive, a flash memory drive, and the like). The removable-storage drive **138** may read from and/or write to a removable storage unit **140** in a well-known manner. The removable storage unit **140** may be, for example, a floppy disk, a magnetic tape, an optical disk, a flash memory device, and the like, which may be written to and read from by the removable-storage drive **138**. The removable storage unit **140** may include a non-transitory computer-readable storage medium storing computer-executable software instructions and/or data.

In further alternative embodiments, the secondary memory **134** may include other computer-readable media storing computer-executable programs or other instructions to be loaded into the computer system **100**. Such devices may include a removable storage unit **144** and an interface **142** (e.g., a program cartridge and a cartridge interface); a removable memory chip (e.g., an erasable programmable read-only memory ("EPROM") or a programmable read-only memory ("PROM")) and an associated memory socket; and other removable storage units **144** and interfaces **142** that allow software and data to be transferred from the removable storage unit **144** to other parts of the computer system **100**.

The computer system **100** also may include a communications interface **146** that enables software and data to be transferred between the computer system **100** and external devices. Such an interface may include a modem, a network interface (e.g., an Ethernet card or an IEEE **802**.**11** wireless LAN interface), a communications port (e.g., a Universal Serial Bus ("USB") port or a FireWire^{®} port), a Personal Computer Memory Card International Association ("PCMCIA") interface, Bluetooth^{®}, and the like. Software and data transferred via the communications interface **146** may be in the form of signals, which may be electronic, electromagnetic, optical or another type of signal that may be capable of being transmitted and/or received by the communications interface **146**. Signals may be provided to the communications interface **146** via a communications path **148** (e.g., a channel). The communications path **148** may carry signals and may be implemented using wire or cable, fiber optics, a telephone line, a cellular link, a radio-frequency ("RF") link, or the like. The communications interface **146** may be used to transfer software or data or other information between the computer system **100** and a remote server or cloud-based storage (not shown).

One or more computer programs or computer control logic may be stored in the main memory **132** and/or the secondary memory **134**. The computer programs may also be received via the communications interface **146**. The computer programs may include computer-executable instructions which, when executed by the computer processor **122**, cause the computer system **100** to perform the methods described. Accordingly, the computer programs may control the computer system **100** and other components of the light guidance system **101**.

In another embodiment, the software may be stored in a non-transitory computer-readable storage medium and loaded into the main memory **132** and/or the secondary memory **134** of the computer system **100** using the removable-storage drive **138**, the hard disk drive **136**, and/or the communications interface **146**. Control logic (software), when executed by the processor **122**, may cause the computer system **100**, and more generally the light guidance system **101** in some embodiments, to perform all or some of the methods described herein.

Lastly, in another example embodiment hardware components such as ASICs, FPGAs, and the like, may be used to carry out the functionality described herein. Implementation of such a hardware arrangement so as to perform the functions described herein will be apparent to persons skilled in the relevant art(s) in view of this description.

Unless otherwise defined, all technical and scientific terms used herein have the same meaning as commonly understood by one of ordinary skill in the art to which this invention belongs. Although methods and materials similar to or equivalent to those described herein may be used in the practice or testing of the disclosure, suitable methods and materials are described above. All publications, patent applications, patents, and other references mentioned herein are incorporated by reference in their entirety to the extent allowed by applicable law and regulations. The disclosure may be embodied in other specific forms without departing from the spirit or essential attributes thereof, and it may therefore be desired that the present embodiment be considered in all respects as illustrative and not restrictive. Any headings utilized within the description are for convenience only and have no legal or limiting effect.

## Claims

1. A method of controlling a system for dynamically providing visual feedback about image data collected during an image acquisition process, said visual feedback provided at or near an object or surface that is recorded in said process, the system (101) comprising: at least one processor; and at least one projector (10) and at least one image sensor (18) in communication with the processor (122), the method comprising the steps of:
providing a plurality of individual 2D images of an object or surface;
determining if at least one of the plurality of individual images and/or an accumulated plurality of images meet predetermined recording criteria; and
projecting said visual feedback onto the object or surface corresponding to the individual images based on the determining step.

2. The method according to claim 1, wherein said visual feedback is projected as part of a projection image (48) which includes a first region corresponding to the illumination for the acquisition of the 2D images and a second region corresponding to the visual feedback.

3. The method according to claim 2, wherein the first region corresponding to the illumination for the acquisition of the 2D images and the second region corresponding to the visual feedback overlap at least partially.

4. The method according to claim 2 or 3, wherein said visual feedback is projected using an illumination beam (20) which produces the first region as an inner region (44) of the projection image (48) from inner rays (24) of the illumination beam and which produces the second region as an outer region (42) of the projection image (48) using outer rays (22) of the illumination beam and vice versa.

5. The method according to claim 4, further comprising alternating the illumination beam between the inner rays and the outer rays.

6. The method according to any one of claims 1 to 5, further comprising providing said visual feedback in real-time.

7. The method according to any one of claims 1 to 6, further comprising extracting the spatial relation between a subset of the plurality of individual 2D images to determine if corresponding regions of the object or surface have been previously acquired.

8. The method according to any one of claims 1 to 7, wherein each of the plurality of individual 2D images overlaps with another individual 2D image to form an overlapping area.

9. The method according to any one claims 1 to 8, wherein the predetermined recording criteria is selected from the group consisting of (i) an adequate size of the overlapping area, (ii) an adequate number of characteristic structures in the overlapping area, (iii) an adequate image quality in the overlapping area and/or (iv) regions of the acquired object or surface not contained in an accumulated data set.

10. The method according to any one of claims 1 to 9, wherein the visual feedback includes feedback about a successful registration, feedback about a non-successful registration, a feedback about not acquired areas of the object or surface, feedback about a user workflow or a feedback about a warning from the acquisition hardware or the processing system.

11. A system for dynamically providing visual feedback about image data collected during image acquisition, said visual feedback provided at or near an object or surface, the system (101) comprising at least one processor configured to execute the method according to any one of claims 1 to 10; and at least one projector (10) and at least one image sensor (18) in communication with the processor (122).

12. The system of claim 11, wherein the projector is housed inside a camera device.

13. The system according to claim 11, wherein the projector is separate from a camera having the at least one image sensor.

14. The system according to any one of claims 11 to 13, wherein the projector (10) is selected from the group consisting of a Digital Light Processing projector, a Light Emitting Diode projector, a Laser projector, a Liquid Crystal on Silicon projector and a Liquid Crystal Display projector.
